# EUROPEAN PATENT SPECIFICATION

(11) **EP 0 927 820 B1**
(45) Date of publication and mention of the grant of the patent: **14.05.2003**
(21) Application number: 97122996.8
(22) Date of filing: 30.12.1997
(51) Int. Cl.: F02F 1/20, F02B 77/02, F16J 10/04, C25D 7/04

(54) **Cast cylinder block and method for manufacturing the same**
Gegossener Zylinderblock und Verfahren zur Herstellung
Bloc cylindre moulé et procédé de fabrication

(43) Date of publication of application: 07.07.1999
(73) Proprietor: YAMAHA HATSUDOKI KABUSHIKI KAISHA, Iwata-shi Shizuoka-ken, 438 (JP)
(72) Inventor: Koriyama, Masao, c/o Yamaha Hatsudoki K.K., Iwata-shi, Shizuoka-ken (JP)
(74) Representative: Grünecker, Kinkeldey, Stockmair & Schwanhäusser Anwaltssozietät

(56) References cited:
- EP-A- 0 641 872
- EP-A- 0 693 618
- EP-A- 0 719 917
- US-A- 5 619 962
- PATENT ABSTRACTS OF JAPAN vol. 010, no. 216 (M-502), 29 July 1986 & JP 61 053444 A (SUZUKI MOTOR CO LTD), 17 March 1986,

## Description

The present invention relates to a cast cylinder block and a method for manufacturing a cast cylinder block.

In a vehicular engine, a light aluminum alloy is employed in a cylinder head or a cylinder block so as to reduce the weight. In this cylinder block cast of an aluminum alloy, however, the cylinder inner face has a low wear resistance to the sliding motions of a piston. It is, therefore, customary to fit a cast iron sleeve (or liner) to raise the wear resistance of the cylinder inner face, in which the piston slides.

When a multi-cylinder engine is to be made compact, however, there is used a sleeveless cast cylinder block, the wear resistance of which is enhanced not by fitting the sleeve in the cylinder but by plating the cylinder inner face of an aluminum alloy directly, for example, with chromium or nickel. Here, cavities are formed at the casting time in the cylinder inner face of the sleeveless cast cylinder block. The cylinder inner face having the cavities is plated by the immersion plating method, in which the cylinder inner face is immersed in the plating liquid for a long time, or by the fast plating method in which the cylinder inner face is electrically plated by pouring the plating liquid fast into the cylinder.

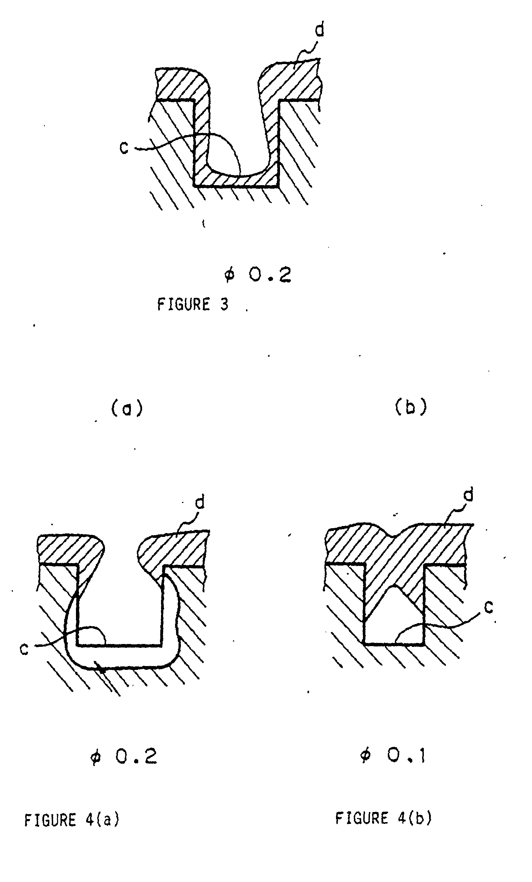

Because of a long time immersion according to the former immersion plating method, the immersion liquid will deeply invade the cavities c as shown in Fig. 3, no matter what size they might take, to form an excellent plated layer d covering the cavities c (Fig. 3 shows the case in which the cavities have a diameter of 0.2 mm). However, the immersion plating method requires the long time immersion so that the costs are raised. For this reason, the latter fast plating method is frequently employed. According to this fast plating method, the plated layer d will invade inward to some extent, as shown in Fig. 4b, if the cavities c have a small diameter (e.g., 0.1 mm), to form a relatively excellent plated layer d.

When the cavities c have a larger diameter (e.g., 0.2 mm), the plated layer d cannot invade into the cavities c, as shown in Fig. 4a, to cause a defective plating so that the exposed faces (of the aluminum material), as having failed to be plated, of the cavities c are degraded to corrode by the combustion products, the lubricant and the fuel. This raises a difficulty that the durability is lost.

An example of a fast plating method is known from EP-A-0 641 872. Said known plating method uses a liquid which permits high speed, phosphorous-containing nickel plating suitable for the plating of an inside peripheral surface of a cylinder in an internal combustion engine. Said nickel plating liquid contains a dispersed eutectoid substance, phosphorous and sodium and is applied at a high electric current density while forcibly driving the plating liquid to flow between the surface of a workpiece to be plated and an electrode.

It is an object of the present invention to provide a cast cylinder block which has an excellent wear resistant layer and, simultaneously, is producible with low costs as well as to provide a method for manufacturing the same.

According to the present invention, this object is solved with regard to the cast cylinder block by the subject-matter of claim 1 and with regard to the method by the subject-matter of claim 6.

In order to provide a multi-cylinder engine being compact, it is advantageous when said inner face is a cylinder inner face. However, in some cases, it is advisable to use a sleeve made of a material being lighter than iron or steel material. These sleeves, in addition, have cavities so that the inner faces of said sleeves are provided with a plated layer as well.

According to the preferred embodiment of the present invention, said sleeve or sleeves are made of aluminium alloy. Other preferred embodiments of the present invention are laid down in further dependent claims.

In the following, the present invention is explained in greater detail with respect to several embodiments thereof in conjunction with the accompanying drawings, wherein:
Fig. 1 is a section of an engine to which the invention is applied;
Fig. 2 is a section of a sleeveless cast cylinder block to be used in the engine of Fig. 1;
Fig. 3 is an enlarged section showing a cavity of the portion plated by the immersion plating method; and
Figs. 4a and 4b are enlarged sections showing cavities (of a larger diameter and a smaller diameter, respectively) of the portion plated by the fast plating method.

The present invention will be explained with respect to embodiments concerning sleeveless cast cylinder blocks, it is obvious that the present invention is also applicable to cast cylinder blocks having sleeves which are made from a material being lighter than iron or steel. Especially, the present invention is also applicable to cast cylinder blocks being provided with sleeves made from aluminum alloy, because there is no essential difference between the inner face of a cylinder and the inner face of said aluminum alloy sleeve.

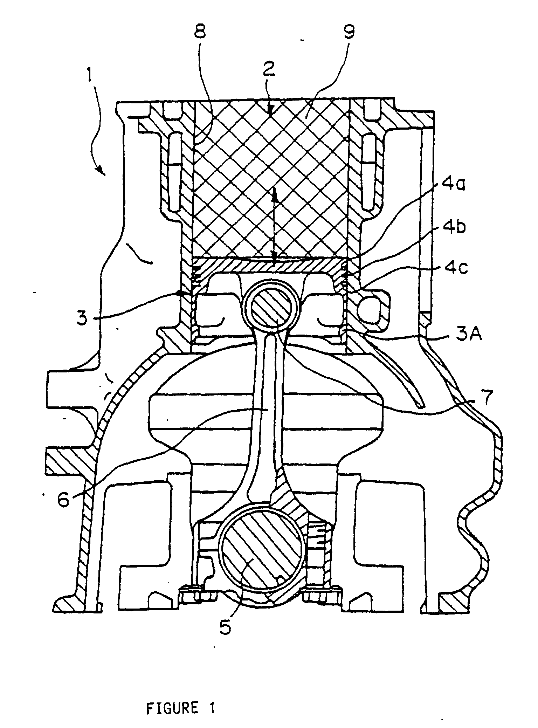

Fig. 1 presents a section showing an engine to which the invention is applied.

A cylinder block 1 is constructed of a cast cylinder block of an aluminum alloy. In the cylinder 2 of the cylinder block 1, there is fitted a piston 3 which is vertically slid. On the piston 3, there are mounted piston rings (i.e., a top ring, a second ring and an oil ring, as recited in the downward order) 4a, 4b and 4c.

As a result, the piston 3 is vertically slid with the piston rings 4a, 4b and 4c mounted thereon abutting against a cylinder inner face 8 of the cylinder 2. Moreover, the piston 3 is rocked to the right and left through a connecting rod 6 and a piston pin 7 by the eccentric rotation of a crank pin 5 so that its skirt 3A vertically slides in abutment against the inner face 8 of the cylinder 2. The cylinder block 1 is thus cast so that numerous cavities are formed, when cast, in the cylinder inner face 8.

In the invention, a fast plated layer 9 is applied when the cavities in the cylinder inner face 8 of the cast cylinder block 1 are within a predetermined allowable range. When the cavities in the cylinder inner face 8 are outside the predetermined allowable range, therefore, the fast plated layer 9 is not applied. This is because the fast plated layer 9 cannot be formed in an excellent quality when the cavities are large.

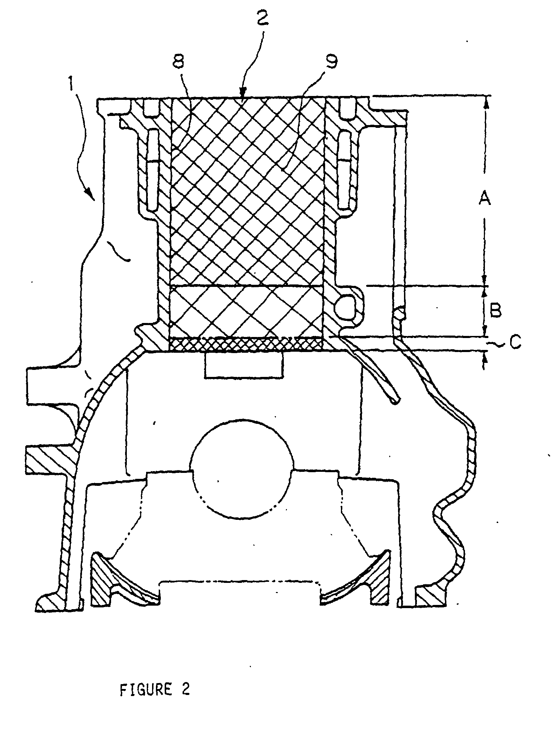

The predetermined allowable range of the cavities existing in the cylinder inner face 8 are different depending upon the plating conditions such as the kind of a plating liquid, the plating rate or the plating time period, but are determined, as follows. The cylinder inner face 8 is divided into three regions, as shown in Fig. 2: a region A (from the top deck to a depth of 101.0 mm, for example), against which the piston rings come into abutment; a region B (from the depth of 101.0 mm to a depth of 132.0 mm, for example), against which the piston skirt 3A comes into abutment; and a plating seal region C (from the depth of 132.0 mm to the lower end) for sealing the fast plating.

The allowable range of the cavities existing in the region A, against which the piston rings come into abutment, is determined such that the maximum size of the cavities is within a diameter of 0.5 mm and a depth of 0.5 mm, such that the shortest distance between the cavities is 6.0 mm and such that the number of the cavities is within four in a common circumference. For this region A, against which the piston rings come into abutment, and the range in which the piston rings 4a, 4b and 4c slide, the allowable range of the cavities is narrowed, because the piston rings are always in sliding abutment within that range so that the range may highly possibly be peeled to influence the oil consumption by the cavities if formed by the defective plating.

The allowable range of the cavities existing in the region B, against which the piston skirt 3A comes into abutment, is determined such that the maximum size of the cavities is within a diameter of 1.0 mm and a depth of 0.8 mm, such that the shortest distance between the cavities is 6.0 mm and such that the number of the cavities is within four in a common circumference. For this region B, against which the piston skirt 3A comes into abutment, the allowable range of the cavities is widened, because the region B is less influenced by the wear than in the region A, against which the piston rings come into abutment, even if more or less cavities are formed by the defective plating.

The allowable range of the cavities existing in the region C for sealing at the fast plating time, is determined such that the maximum size of the cavities is within a diameter of 0.5 mm and a depth of 0.8 mm and such that the shortest distance between the cavities is 6.0 mm. In this plating seal region C, the diameter of the cavities is narrowed in its allowable range than in the region B, against which the piston skirt 3A comes into abutment, so that the plating liquid may be prevented from leaking out of the defectively plated cavities. Here, all over the cylinder inner face 8, the cavities having a diameter of 0.1 mm and a depth of 0.8 mm or less are allowed to exist because they exert little influence. Optimum allowable values are desirably selected by considering the kind of the cast cylinder block the kind of the plating liquid, the plating rate, the temperature of the plating liquid and the plating time period.

In the process for manufacturing the sleeveless cast cylinder block according to the invention; the size and depth of the cavities, which exist in the cylinder inner face 8 of the cast cylinder block 1, are measured by an optical device or an electric device to collate the measured values with the aforementioned allowable values thereby to decide whether or not the plating is to be executed, and the cylinder inner face 8, the cavities of which are within the allowable range, is exclusively plated by the fast plating method to form the fast plated layer 9. As a result, the cylinder block 1 having the cylinder inner face 8, the cavities of which have a high defective plating probability and is outside the allowable range, is not subjected to the fast plating so that no useless plating is executed.

By thus plating only the selected cylinder block 1, the plating penetrates deeply into the cavities so that the cylinder block 1 can be coated with the excellent fast plated layer 9. This fast plated layer 9 to be fast plated is made of a wear resisting material including nickel, iron or chromium. This fast plating process is disclosed in U.S.P. No. 5,619,962.

By plating the sleeveless cast cylinder block by that method, a sleeveless cast cylinder block, as coated with the excellent fast plated layer 9 having no defectively plated cavity can be provided even if the cylinder inner face 8 has the cavities. As a result, the cylinder inner face 8 can be made durable by preventing its corrosion which might otherwise be caused by the combustion products, the lubricant or the fuel.

The invention can also be applied to a sleeveless cast cylinder block other than the sleeveless cast cylinder block made of an aluminum alloy.

According to the invention, as has been described hereinbefore, the cylinder inner face, the cavities of which are within the predetermined allowable range, is coated with the fast plated layer so that it is not degraded by the combustion products, the lubricant and the fuel but is prevented from being corroded. As a result, it is possible to provide a sleeveless cast cylinder block having a durability. Moreover, only the cylinder block, the cavities of which are within the predetermined allowable range, is plated so that the plating can be performed usefully and efficiently. Still moreover, the fast plating can shorten the plating time period to lower the cost.

## Claims

1. Cast cylinder block (1) comprising at least one cylinder (2) having an inner face (8) provided with a plated layer (9), wherein
said inner face (8) comprises cavities (c) the sizes as well as the respective distribution of which are within a predetermined allowable range,
said cylinder inner face (8) is coated with a fast plated layer (9),
said inner face (8) is divided into three regions (A,B,C):
a first region (A) against which a sliding surface of a piston (3) comes into abutment;
a second region (B) against which a skirt (3A) of the sliding piston (3) comes into abutment; and
a plating seal region (C) for sealing the fast plating,
wherein the inner face (8), in which the sizes as well as the distribution of the cavities (c) existing in said individual regions (A,B,C) are within their individual predetermined allowable ranges being coated with the fast plated layer (9), and the individual predetermined allowable ranges are such that:
for the first region A a maximum size of the cavities (c) is within a diameter of 0.5 mm and a depth of 0.5 mm, the shortest distance between the cavities (c) is 6.0 mm and the number of the cavities (c) is within four in a common circumference;
for the second region B a maximum size of the cavities (c) is within a diameter of 1.0 mm and a depth of 0.8 mm, the shortest distance between the cavities (c) is 6.0 mm and the number of the cavities (c) is within four in a common circumference; and
for the plating seal region C a maximum size of the cavities (c) is within a diameter of 0.5 mm and a depth of 0.8 mm, the shortest distance between the cavities (c) is 6.0 mm.

2. Cast cylinder block (1) according to claim 1, **characterized In that** said inner face is a cylinder inner face (8) or an inner face of an inserted sleeve.

3. Cast cylinder block according to claim 2, **characterized in that** said sleeve is made of aluminum alloy.

4. Cast cylinder block according to at least one of the preceding claims 1 to 3, **characterized in that** the fast plated layer (9) comprising a wear resisting material including nickel, iron or chromium.

5. Cast cylinder block according to at least one of the preceding claims 1 to 4, **characterized in that** the cast cylinder block (1) is made of aluminum.

6. Method for manufacturing a cylinder block (1) comprising at least one cylinder (2), an Inner face (8) of which being provided with a protective plated layer (9), comprising the steps of:
casting said cylinder block (1),
measuring cavities (c) in the inner face (8) of the cast cylinder block (1) to decide whether or not the sizes as well as the distribution of the measured cavities (c) are within a predetermined allowable range; and
coating the inner face (8), the cavities (c) of which are within the predetermined allowable range, with a fast plated layer (9) by a fast plating method, wherein, for said measuring step said inner face (8) is divided into three regions (A,B,C);
a first region (A) against which a sliding surface of a piston (3) comes into abutment;
a second region (B) against which a skirt (3A) at the sliding piston (3) comes into abutment; and
a plating seal region (C) for sealing the fast plating,
the cavities (c) of the individual regions (A,B,C) are measured to decide whether or not the measured cavities (c) are within their individual allowable ranges,
the cylinder inner face (8), in which the cavities (c) of said individual regions (A,B,C) are within the individual predetermined allowable ranges, is coated with a fast plated layer (9) by the fast plating method, and
the individual allowable ranges (A,B,C) are predetermined such that:
for the first region A a maximum size of the cavities (c) is within a diameter of 0.5 mm and a depth of 0.5 mm, the shortest distance between the cavities (c) is 6.0 mm and the number of the cavities (c) is within four in a common circumference;
for the second region B a maximum size of the cavities (c) is within a diameter of 1.0 mm and a depth of 0.8 mm, the shortest distance between the cavities (c) is 6.0 mm and the number of the cavities (c) is within four in a common circumference; and
for the plating seal region C a maximum size of the cavities (c) is within a diameter of 0.5 mm and a depth of 0.8 mm and the shortest distance between the cavities (c) is 6.0 mm.

7. Method according to claim 6, **characterized In that** said inner face is a cylinder inner face (8) or an inner face of an inserted sleeve.

8. Method according to claim 7, **characterized in that** said sleeve is made of aluminum alloy.

9. Method according to at least one of the preceding claims 6 to 8, **characterized in that** the fast plated layer (9) comprises a wear resisting material including nickel, iron or chromium.

10. Method according to at least one of the preceding claims 6 to 9, **characterized in that** the cast cylinder block (1) is made of aluminum.

## Patentansprüche

1. Gusszylinderblock (1) mit zumindest einem Zylinder (2), der eine Innenfläche (8) hat, versehen mit einer plattierten Schicht (9), wobei
die Innenfläche (8) Vertiefungen (c ) aufweist, deren Größe sowie die jeweilige Verteilung innerhalb eines vorbestimmten, gestatteten Bereiches sind,
wobei die Zylinderinnenfläche (8) mit einer schnell- plattierten Schicht (9) überzogen ist,
die Innenfläche (8) in drei Bereiche (A, B, C) unterteilt ist:
einen ersten Bereich (A), gegen den eine Gleitoberfläche eines Kolbens (3) zum Anliegen kommt;
einen zweiten Bereich (B), gegen den ein Rand (3A) des Gleitkolbens (3) zum Anliegen kommt; und
einen Plattierungsabdichtbereich (C) zum Abdichten der Schellplattierung,
wobei die Innenfläche (8), in der sowohl die Größe, als auch die Verteilung der Vertiefungen (c), die in den einzelnen Bereichen (A, B, C) vorhanden sind, innerhalb ihrer einzelnen, vorbestimmten, gestatteten Bereiche sind, die mit der schnell- plattierten Schicht (9) überzogen ist, und die einzelnen, vorbestimmten, gestatteten Bereiche derart sind, dass:
für den ersten Bereich A eine maximale Größe der Vertiefungen (c ) innerhalb eines Durchmessers von 0,5 mm und einer Tiefe von 0,5 mm ist, und der kürzeste Abstand zwischen den Vertiefungen (c ) 6,0 mm ist und die Anzahl der Vertiefungen (c) innerhalb eines gemeinsamen Umfanges bis zu vier beträgt;
für den zweiten Bereich B eine maximale Größe der Vertiefungen (c ) innerhalb eines Durchmessers von 1,0 mm und einer Tiefe von 0,8 mm ist, wobei der kürzeste Abstand zwischen den Vertiefungen (c ) 6,0 mm ist und die Anzahl der Vertiefungen innerhalb eines gemeinsamen Umfanges bis zu vier beträgt; und
für den Plattierungsabdichtbereich C eine maximale Größe der Vertiefungen (c ) innerhalb eines Durchmessers von 0,5 mm und einer Tiefe von 0,8 mm ist, wobei der kürzeste Abstand zwischen den Vertiefungen (c) 6,0 mm ist.

2. Gusszylinderblock (1) nach Anspruch 1, **dadurch gekennzeichnet, dass** die Innenfläche eine Zylinderinnenfläche (8) oder eine Innenfläche einer eingesetzten Hülse ist.

3. Gusszylinderblock nach Anspruch 2, **dadurch gekennzeichnet, dass** die Hülse aus einer Aluminiumlegierung hergestellt ist.

4. Gusszylinderblock nach zumindest einem der vorhergegangenen Ansprüche 1 bis 3, **dadurch gekennzeichnet, dass** die schnell- plattierte Schicht (9) ein verschleißfestes Material aufweist, das Nickel, Eisen oder Chrom enthält.

5. Gusszylinderblock nach zumindest einem der vorhergegangenen Ansprüche 1 bis 4, **dadurch gekennzeichnet, dass** der Gusszylinderblock (1) aus Aluminium hergestellt ist.

6. Verfahren zur Herstellung eines Zylinderblockes (1) mit zumindest einem Zylinder (2), einer Innenfläche (8), die mit einer schützenden plattierten Schicht (9) versehen ist, mit den Schritten von:
Gießen des Zylinderblockes (1),
Messen von Vertiefungen (c) in der Innenfläche(8) des Gusszylinderblockes (1), um zu entscheiden, ob die Größen sowie die Verteilung der gemessenen Vertiefungen (c) innerhalb eines vorbestimmten, gestatteten Bereiches sind, oder ob nicht; und
Beschichten der Innenfläche (8) deren Vertiefungen (c ) innerhalb des vorbestimmten, gestatteten Bereiches sind, mit einer festen, plattierten Schicht (9) durch ein Schnell-Plattierungsverfahren, wobei die Innenfläche (8) für den Messschritt (8) in drei Bereiche (A, B, C) unterteilt wird; einen ersten Bereich (A), gegen den eine Gleitoberfläche eines Kolbens (3) zur Anlage kommt:
einen zweiten Bereich (B), gegen den ein Rand (3A) an dem gleitend der Kolben (3) zur Anlage kommt; und
einem Plattierungsabdichtbereich (C ) zum Abdichten der schnellen Plattierung,
wobei die Vertiefungen (c) der einzelnen Bereiche (A, B, C) gemessen werden, um zu entscheiden, ob die gemessenen Vertiefungen (c) innerhalb ihrer einzeln, gestatteten Bereiche sind, oder ob nicht,
die Zylinderinnenfläche (8), in der die Vertiefungen (c) der einzelnen Bereiche (A, B, C) innerhalb ihrer einzelnen, vorbestimmten, gestatteten Bereiche sind, mit einer schnell- plattierten Schicht (9) durch das Schnell- Plattierungsverfahren überzogen wird, und
die einzelnen, gestatteten Bereiche (A, B, C) derart vorbestimmt sind, dass:
für den ersten Bereich A eine maximale Größe der Vertiefungen (c) innerhalb eines Durchmessers von 0,5 mm und einer Tiefe von 0,5 mm ist, der kürzeste Abstand zwischen den Vertiefungen (c) 6,0 mm ist und die Anzahl der Vertiefungen (c) innerhalb eines gemeinsamen Umfanges bis zu vier beträgt;
für den zweiten Bereich B eine maximale Größe der Vertiefungen (c) innerhalb eines Durchmessers von 1,0 mm und einer Tiefe von 0,8 mm ist, wobei der kürzeste Abstand zwischen den Vertiefungen (c) 6,0 mm ist und die Anzahl der Vertiefungen innerhalb eines gemeinsamen Umfanges bis zu vier beträgt; und
für den Plattierungsabdichtbereich C eine maximale Größe der Vertiefungen (c) innerhalb eines Durchmessers von 0,5 mm und einer Tiefe von 0,8 mm ist und der kürzeste Abstand zwischen den Vertiefungen (c) 6,0 mm ist.

7. Verfahren nach Anspruch 6, **dadurch gekennzeichnet, dass** die Innenfläche eine Zylinderinnenfläche (8) oder eine Innenfläche einer eingesetzten Hülse ist.

8. Verfahren nach Anspruch 7, **dadurch gekennzeichnet, dass,** die Hülse aus einer Aluminiumlegierung hergestellt ist.

9. Verfahren nach zumindest einem der vorausgegangenen Ansprüche 6 bis 8, **dadurch gekennzeichnet, dass** die schnell- plattierte Schicht (9) ein verschleißfestes Material aufweist, das Nickel, Eisen oder Chrom enthält.

10. Verfahren nach zumindest einem der vorausgegangenen Ansprüche 6 bis 9, **dadurch gekennzeichnet, dass** der Gusszylinderblock (1) aus Aluminium hergestellt ist.

## Revendications

1. Bloc-cylindres (1) moulé comprenant au moins un cylindre (2) ayant une face intérieure (8) munie d'une couche (9) plaquée, dans lequel,
ladite face intérieure (8) comprend des cavités (c) dont les tailles, ainsi que la répartition respective, sont dans une plage admissible prédéterminée,
ladite face intérieure (8) de cylindre est revêtue d'une couche (9) à plaquage rapide,
ladite face intérieure (8) est divisée trois régions (A,B,C) :
une première région (A) contre laquelle une surface de coulissement d'un piston (3) vient en butée ;
une deuxième région (B) contre laquelle une jupe (3A) du piston (3) coulissant vient en butée ; et
une région d'étanchéité de plaquage (C) pour étanchéifier le plaquage rapide,
dans lequel la face intérieure (8), dans lesquelles les tailles ainsi que la répartition des cavités (C) existant dans lesdites régions individuelles (A,B,C) sont dans leurs plages admissibles prédéterminées, est revêtue de la couche (9) à plaquage rapide, et les plages admissibles prédéterminées individuelles sont telles que :
pour la première région A, la taille maximale des cavités (c) est dans un diamètre de 0,5 mm et une profondeur de 0,5 mm, la distance la plus courte entre les cavités (c) est de 6,0 mm et le nombre des cavités (c) est dans une limite de quatre dans une circonférence commune ;
pour la deuxième région B, la taille maximale des cavités (c) est dans un diamètre de 1,0 mm et une profondeur de 0,8 mm, la distance la plus courte entre les cavités (c) est de 6,0 mm et le nombre des cavités (c) est dans une limite de quatre dans une circonférence commune ; et
pour la région d'étanchéité de plaquage C, la taille maximale des cavités (c) est dans un diamètre de 0,5 mm et une profondeur de 0,8 mm, la distance la plus courte entre les cavités (c) est de 6,0 mm.

2. Bloc-cylindres (1) moulé selon la revendication 1, **caractérisé en ce que** ladite face intérieure est une face intérieure (8) de cylindre ou une face intérieure d'une chemise insérée.

3. Bloc-cylindres selon la revendication 2, **caractérisé en ce que** ladite chemise est réalisée en alliage d'aluminium.

4. Bloc-cylindres selon au moins l'une des revendications 1 à 3 précédentes, **caractérisé en ce que** la couche (9) à plaquage rapide comprend un matériau résistant à l'usure, incluant du nickel, du fer ou du chrome.

5. Bloc-cylindres selon au moins l'une des revendications 1 à 4 précédentes, **caractérisé en ce que** le bloc-cylindres (1) moulé est réalisé en aluminium.

6. Procédé de fabrication d'un bloc-cylindres (1) comprenant au moins un cylindre (2), une face intérieure (8) munie d'une couche (9) à plaquage protecteur, comprenant les étapes consistant à :
mouler ledit bloc-cylindres (1),
mesurer les cavités (c) dont la face intérieure (8) du bloc-cylindres (1) moulé, pour décider si les tailles ainsi que la répartition des cavités (c) mesurées sont ou non dans les limites d'une plage admissible prédéterminée ; et
revêtir la face intérieure (8), dont les cavités (c) sont dans les limites de la plage admissible prédéterminée, d'une couche (9) à plaquage rapide, par un procédé à plaquage rapide, dans lequel, pour ladite étape de mesure, ladite face intérieure (8) est divisée trois régions (A,B,C) :
une première région (A) contre laquelle une surface de coulissement d'un piston (3) vient en butée ;
une deuxième région (B) contre laquelle une jupe (3A) sur le piston (3) coulissant vient en butée ; et
une région d'étanchéité de plaquage (C) pour étanchéifier le plaquage rapide,
les cavités (c) des régions (A,B,C) individuelles sont mesurées pour décider si les cavités (c) mesurées sont ou non dans les limites de leurs plages admissibles individuelles,
la face intérieure (8) du cylindre, dans laquelle les cavités (c) desdites régions (A,B,C) individuelles se trouvent dans les limites des plages admissibles prédéterminées individuelles, est revêtue d'une couche (9) à plaquage rapide, par le procédé de plaquage rapide, et
les plages admissibles (A,B,C) individuelles sont prédéterminées de manière que :
pour la première région A, la taille maximale des cavités (c) est dans un diamètre de 0,5 mm et une profondeur de 0,5 mm, la distance la plus courte entre les cavités (c) est de 6,0 mm et le nombre des cavités (c) est dans une limite de quatre dans une circonférence commune ;
pour la deuxième région B, la taille maximale des cavités (c) est dans un diamètre de 1,0 mm et la profondeur de 0,8 mm, la distance la plus courte entre les cavités (c) est de 6,0 mm et le nombre des cavités (c) est dans la limite de quatre dans une circonférence commune ; et
pour la région d'étanchéité de plaquage C, la taille maximale des cavités (c) est dans un diamètre de. 0,5 mm et une profondeur de 0,8 mm, et la distance la plus courte entre les cavités (c) est de 6,0 mm.

7. Procédé selon la revendication 6, **caractérisé en ce que** ladite face intérieure est une face intérieure de cylindre (8) ou une face intérieure d'une chemise insérée.

8. Procédé selon la revendication 7, **caractérisé en ce que** ladite chemise est réalisée en alliage d'aluminium.

9. Procédé selon au moins l'une des revendications 6 à 8 précédentes, **caractérisé en ce que** la couche (9) à plaquage rapide comprend un matériau résistant à l'usure incluant du nickel, du fer ou du chrome.

10. Procédé selon au moins l'une quelconque des revendications 6 à 9 précédentes, **caractérisé en ce que** le bloc-cylindres (1) moulé est réalisé en aluminium.
